# EUROPÄISCHE PATENTANMELDUNG

(11) **EP 1 513 303 A1**
(43) Veröffentlichungstag der Anmeldung: **09.03.2005**
(21) Anmeldenummer: 04009800.6
(22) Anmeldetag: 26.04.2004
(51) Int. Cl.: H04L 12/58

(54) **Verfahren und System zur Speicherung von Nachrichten mit Adresszeiger**

(30) Priorität: 02.09.2003 DE 10340288
(71) Anmelder: Deutsche Telekom AG, 53113 Bonn (DE)
(72) Erfinder: Bindel, Frank, 53639 Königswinter (DE); Scheerbarth, Thomas, 12555 Berlin (DE); Trinkel, Marian, 52372 Kreuzau OT Untermaubach (DE)

(57) **Zusammenfassung**

Die Erfindung betrifft ein Verfahren zur Behandlung von Nachrichten, die von einem Absender über ein Kommunikationsnetz, insbesondere ein Telefonnetz oder das Internet, an einen Adressaten gesendet werden, wobei eine Nachricht in einem Speicher zum späteren Abruf durch den Adressaten zwischengespeichert wird und der Adressat eine Kurznachricht über den Erhalt der Nachricht bekommt, wobei in Verbindung mit der Kurznachricht ein Adresszeiger generiert wird, der auf den Speicherplatz der Nachricht hinweist, wobei eine Nachricht während ihrer Speicherzeit nacheinander in unterschiedlichen Speichern gespeichert wird und der Adresszeiger an die Adresse des momentanen Speichers angepasst wird. Die Erfindung betrifft weiterhin ein System, insbesondere zur Durchführung des Verfahrens.

## Beschreibung

Die Erfindung betrifft ein Verfahren und ein System zur Behandlung von Nachrichten, die von einem Absender über ein Kommunikationsnetz, insbesondere ein Telefonnetz oder das Internet, an einen Adressaten gesendet werden, wobei eine Nachricht in einem Speicher zum späteren Abruf durch den Adressaten zwischengespeichert wird und der Adressat eine Kurznachricht über den Erhalt der Nachricht bekommt, wobei in Verbindung mit der Kurznachricht ein Adresszeiger generiert wird, der auf den Speicherplatz der Nachricht hinweist.

Derartige Verfahren und Systeme sind allgemein bekannt. Mit beispielhaftem Bezug auf e-mail-Nachrichten ist es bekannt, dass bei einer lokalen dezentralen Speicherung der eingelaufenen Nachrichten, beispielsweise auf dem Computer eines angesprochenen Adressaten, der dort verfügbare Speicherplatz sehr schnell zur Neige geht, insbesondere dann, wenn die aufgelaufenen e-mails nicht regelmäßig gelöscht werden. Derartige Probleme gibt es nicht nur im Bereich der e-mail-Kommunikation, sondern auch bei Sprachnachrichten, die beispielsweise auf Voice-Mail-Boxen oder Anrufbeantwortern auflaufen.

Für eine Abhilfe dieses Problems ist es beispielsweise ebenso bekannt, die eingelaufenen Nachrichten nicht dezentral, d.h. lokal bei den Adressaten zu speichern, sondern zentral auf dem Rechner eines entsprechenden Netzanbieters. So können beispielsweise eingelaufene Nachrichten auf einem Server des Netzanbieters abgespeichert werden und der Adressat erhält lediglich eine Kurznachricht über den Erhalt der Nachricht. Diese Kurznachricht kann sich beispielsweise aus dem Inhalt der angegebenen Betreffzeile bei e-mails zusammensetzen oder auch automatisch generiert werden durch entsprechende Programme, die beispielsweise den Inhalt einer Nachricht analysieren. Derartige Programme zählen ebenfalls zum Stand der Technik.

Mittels dieser Programme ist es möglich den Inhalt einer e-mail-Nachricht oder auch einer beliebigen anderen Nachricht, wie beispielsweise einer Sprachnachricht, zu analysieren und so eine Kurznachricht zu erstellen, die dem Adressaten übermittelt wird.

Beispielsweise aus der DE 102 14 842 ist es ergänzend bekannt in Verbindung mit einer solchen Kurznachricht einen Adresszeiger zu generieren, der auf den Speicherplatz hinweist, unter dem die vollständige ursprüngliche Nachricht hinterlegt ist.

Mit beispielhaftem Bezug auf die e-mail-Kommunikation kann dementsprechend ein Adressat nach Empfang der Kurznachricht diese Kurznachricht auswählen und erhält automatisch durch Adressverweis auf den Speicherplatz der ursprünglichen Nachricht diese ursprüngliche Nachricht übermittelt und angezeigt.

Das grundsätzliche Problem eventueller Speicherüberläufe durch eine zu große Anzahl dezentral aufgelaufener Nachrichten ist durch die zentrale Speicherung der Nachrichten jedoch nicht beseitigt, sondern lediglich hinsichtlich der Größenordnung in der Relevanz verschoben. Grundsätzlich kann es auch bei einer zentralen Speicherung auftreten, dass eine derart hohe Anzahl von Nachrichten, z.B. e-mails, Sprachnachrichten etc. auf dem zentralen Rechner eines Netzanbieters auflaufen, dass der dort zur Verfügung gestellte Speicherplatz nicht mehr ausreichend ist. In solchen Fällen ist es beispielsweise bekannt einen Teil der e-mails auf andere Medien auszulagern, beispielsweise über Band, Roboter oder Jukeboxen. Ein Zugriff auf diese ausgelagerten e-mails ist jedoch nicht ohne Weiteres mehr möglich. Ebenso ist es bekannt die Daten durch eine Komprimierung zu verringern.

Aufgabe der Erfindung ist es ein Verfahren und ein System zur Behandlung von Nachrichten bereitzustellen, welches die oben genannten Nachteile überwindet, d.h. insbesondere dafür Sorge trägt, dass in einem Kommunikationsnetz für die Speicherung von Nachrichten genügend Speicherplatz zur Verfügung steht.

Diese Aufgabe wird erfindungsgemäß dadurch gelöst, dass verfahrensgemäß eine Nachricht während ihrer Speicherzeit nacheinander in unterschiedlichen Speichern gespeichert wird und der Adresszeiger an die Adresse des momentanen Speichers angepasst wird.

Wesentlicher Gedanke bei dem erfindungsgemäßen Verfahren bzw. dem erfindungsgemäßen System ist es dementsprechend, dass weder eine lokale Speicherung direkt beim Adressaten stattfindet, noch dass ausschließlich auf einen einzigen Speicher eines Rechners eines Diensteanbieters die Speicherung einer Nachricht beschränkt wird. Dies hätte grundsätzlich immer den Nachteil, dass die Kapazität des Rechners dieses einen Diensteanbieters beschränkt ist und dementsprechend ein Speicherüberlauf immer möglich ist.

Nach dem erfindungsgemäßen Verfahren ist es dementsprechend vorgesehen, dass eine Nachricht, die beispielsweise auf einem zentralen Server eines Dienstanbieters aufgelaufen ist, nicht stationär auf diesem Server verbleibt. Es besteht die Möglichkeit diese Nachricht an andere Speicher weiter zu versenden, beispielsweise wenn eine Speicherplatzbegrenzung oder ein beliebiges anderes Kriterium auftritt.

Erfindungsgemäß kann es vorgesehen sein, dass ein Speicher, auf dem eine Nachricht hinterlegt wird, Teil eines an das Kommunikationsnetz angeschlossenen Computers ist. Dies ist beispielsweise regelmäßig der Fall bei den zentralen Datenspeichern auf dem Computer eines Diensteanbieters. Insbesondere kann jeder während des erfindungsgemäßen Verfahrens benutzte Speicher Teil eines anderen Computers und insbesondere Teil eines anderen Computers eines anderen Diensteanbieters sein.

Wird nun eine Nachricht beispielsweise von einem Speicher auf einen anderen Speicher, beispielsweise eines anderen Computers und gegebenenfalls eines anderen Diensteanbieters übertragen, so wird anschließend automatisch der Adresszeiger, der mit der ursprünglichen Kurznachricht verbunden ist, neu in der Art generiert, dass er nunmehr auf den neuen Speicherplatz verweist, so dass der Adressat bei entsprechender Auswahl der Kurznachricht auf den neuen Speicherplatz zugreift und die vollständige Nachricht abrufen kann. Für dieses Verfahren bedarf es nicht einmal einer neuen Generierung einer Kurznachricht, soferndies ursprünglich vorgesehen war. Die ursprüngliche Kurznachricht kann bestehen bleiben, lediglich die Verknüpfung mit dem Adresszeiger wird geändert.

Nach dem erfindungsgemäßen Verfahren kann es bevorzugt vorgesehen sein, dass eine Nachricht in Abhängigkeit wenigstens eines vorgegebenen Kriteriums von einem Speicher in einen anderen übertragen wird. Ein solches Kriterium kann beispielsweise der verfügbare Speicherplatz darstellen. Stellt sich heraus, dass z.B. der verfügbare Speicherplatz auf dem zentralen Computer eines Diensteanbieters an den Rand seiner Kapazität kommt, so kann es bevorzugt vorgesehen sein, dass in diesem Fall eine oder mehrere Nachrichten von diesem Speicher auf einen anderen Speicher übertragen werden. Dies kann beispielsweise nach dem Prinzip first-in-first-out oder first-in-last-out erfolgen, was bedeutet, dass nach dem erstgenannten Prinzip eine als erste eingelaufene Nachricht von dem Server als erste wieder auf einen anderen Speicher übertragen wird. Gemäß dem zweiten Prinzip bedeutet dies, dass eine zuerst eingelaufene Nachricht als letzte auf einen anderen Speicher übertragen wird.

In einer anderen Alternative kann es vorgesehen sein, dass die Übertragung von einem Speicher auf einen anderen z.B. in Abhängigkeit von der Art des Inhaltes einer Nachricht erfolgt. Mit beispielhaftem Bezug auf e-mail-Nachrichten kann es so z.B. vorgesehen sein, dass e-mails, die z.B. Newsletter enthalten, grundsätzlich auf andere Speicher übertragen werden als beispielsweise e-mails, die persönliche Nachrichten an den Adressaten aufweisen.

Hierbei kann es gegebenenfalls vorgesehen sein, dass die Übertragung einer Nachricht von einem Speicher in einen anderen Speicher nach Rückfrage beim Adressaten oder auch automatisch erfolgt, so dass der Adressat hierüber keine Information erhält. Einer derartigen Information bedarf es auch nicht unbedingt, da automatisch der Adresszeiger aktualisiert wird und somit der Adressat beim Auswählen seiner Nachricht immer auf den ursprünglichen Text zugreifen kann, egal an welchem Speicherplatz die Nachricht momentan abgelegt ist. Ebenso kann die Rückfrage beim Adressaten vorgesehen sein, beispielsweise mittels eines Callcenters oder aber auch durch eine computergenerierte Anweisung, so dass der Adressat selbst angeben kann, auf welchen nächsten Speicher die Nachricht übertragen werden soll oder wie er bei Erfüllung eines obengenannten Kriteriums verfahren möchte.

Insbesondere bei der automatischen Weiterleitung einer Nachricht von einem Speicher auf einen anderen kann es vorgesehen sein, dass der Weg einer Nachricht, insbesondere die Reihenfolge der Speicher, vorgegeben ist. Wie bereits oben erwähnt, kann es mit beispielhaftem Bezug auf e-mail-Nachrichten z.B. vorgesehen sein, dass der Weg einer Newsletter-e-mail ein anderer ist als der Weg einer persönlichen e-mail. Ein solcher jeweiliger Weg kann sich immer weiter fortsetzen, d.h. von einem ersten Speicher auf einen zweiten übertragen werden und bei Erfüllung eventueller weiterer Kriterien von diesem zweiten auf einen dritten und so weiter auf immer wieder nächste Speicher übertragen werden.

Um die Anzahl verfügbarer Speicher nicht ins Unermessliche laufen zu lassen, kann es hierbei bevorzugt vorgesehen sein, dass der Weg einer Nachricht durch die verschiedenen möglichen Speicher ein geschlossener Weg ist, insbesondere wobei dieser abhängig ist von wenigstens einem Kriterium, wie beispielsweise der Art des Inhalts der Nachricht. So kann es vorgesehen sein, dass mit beispielhaftem Bezug auf die oben genannten e-mails der geschlossene Weg einer Newletter-Nachricht über eine Vielzahl von unterschiedlichen Speichern ein anderer ist als der Weg von persönlich bezogenen e-mails. Hierbei kann es ergänzend vorgesehen sein, dass der zentrale Speicher, auf dem eine Nachricht erstmalig einläuft, auf dem geschlossenen Weg von der Nachricht immer wieder gekreuzt wird.

Das erfindungsgemäße Verfahren hat den wesentlichen Vorteil, dass der Speicherplatz einer Nachricht dynamisiert ist und nach beliebigen Kriterien, wie beispielsweise der Speicherplatzverfügbarkeit, auswählbar ist. Das gesamte Speichersystem kann sich automatisch z.B. an die Verfügbarkeit des Speicherplatzes auf einem Rechner, beispielsweise eines ersten Netzdienstanbieters, einstellen und, sofern dieser Speicherplatz zur Neige geht oder ein anderes Kriterium erfüllt ist, die Nachrichten umverteilen auf entsprechende Speicherplätze auf anderen Computern, beispielsweise auch anderer Netzdienstanbieter.

In bevorzugter Weise kann es gemäß dem erfindungsgemäßen Verfahren vorgesehen sein, dass eine Abrechnung der Kosten für die Speicherung einer Nachricht in Abhängigkeit des Weges erfolgt, insbesondere wobei die Kosten für die Speicherung auf einem Weg von einem Sponsor zumindest teilweise übernommen werden.

So kann es beispielsweise vorgesehen sein, dass Nachrichten einer bestimmten Themenart oder eines bestimmten Protokolls, einen bestimmten geschlossenen Weg über verschiedene Speicher durchlaufen, wobei die entsprechenden Kosten für die Speicherung auf den Computern dieses vorgegebenen geschlossenen Weges von einem Sponsor übernommen werden können, der einen Bezug zu dem entsprechenden Thema hat.

Beispielsweise können Nachrichten, die thematisch mit Neuigkeiten über den Netzdienstanbieter zusammenhängen, von dem Netzdienstanbieter selbst gesponsert werden, so dass bezüglich dieser Neuigkeiten keine Kosten dem Adressaten in Rechnung gestellt werden. Ebenso können die Kosten sportbasierter Nachrichten von einem Sportpromoter übernommen werden. Allgemein lässt sich dementsprechend jeder mögliche Weg einer Nachricht durch das Netzsystem in Abhängigkeit eines beliebigen Kriteriums verrechnen.

In einem anderen Beispiel können Nachrichen die hinsichtlich des Protololls über das UMTS-Netz von einem anderen Sponsor bezahlt werden als z.B. Nachrichten über das GSM-Netz.

Die Analyse einer Nachricht hinsichtlich ihrer Thematik ist an sich bekannt und kann mit entsprechenden Programmen vorgenommen werden. Es kann sich hierbei beispielsweise um ein Programm handeln, durch welches auch die oben erwähnte Kurznachricht generiert wird. Insbesondere kann die Kurznachricht selbst das Kriterium hinsichtlich der Abhängigkeit eines Weges darstellen.

Ein System, mit welchem insbesondere das erfindungsgemäße Verfahren durchgeführt werden kann, umfasst wenigstens ein Kommunikationsnetz mit mehreren Computern, die wenigstens zur temporären Speicherung von Nachrichten eingesetzt werden. In diesem System ist es gemäß der Erfindung vorgesehen eine Nachricht anhand eines vorgegebenen Kriteriums von dem Speicherplatz eines Computers auf einen anderen Computer automatisch zu übertragen, insbesondere wobei die Computer derart organisiert sind, dass sie einen ringförmigen Weg der Nachricht im Kommunikationsnetz bilden.

Ein Ausführungsbeispiel der Erfindung ist in der nachfolgenden Zeichnung schematisch dargestellt.

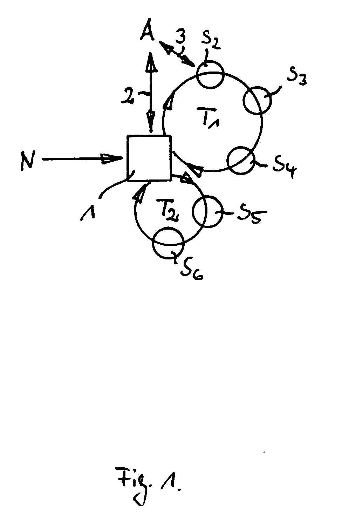

Die Figur 1 verdeutlicht die grundsätzliche Funktion des erfindungsgemäßen Verfahrens. Es ist hier dargestellt, dass eine Nachricht N von einem nicht gezeigten Absender beispielsweise in Form einer e-mail auf den zentralen Datenserver 1 des Netzbetreibers aufläuft, dem der Adressat A als Kunde angeschlossen ist. Diese Nachricht kann beispielsweise zentral auf dem zentralen Datenserver 1 in einem Speicher abgelegt werden. Der Adressat A erhält über eine Kommunikationsverbindung 2 eine Kurznachricht und wird so darüber informiert, dass eine e-mail zum Abruf bereit liegt.

Hierbei kann die Kurznachricht aus der Betreffzeile der entsprechenden e-mail gebildet sein bzw. diese darstellen oder aber auch separat generiert werden. Dies kann beispielsweise anhand des Inhaltes der e-mail erfolgen durch entsprechende Programme, die vorgesehen sind ein sogenanntes Datamining, Contentmining oder Factmining durchzuführen, d.h. eine Nachricht auf ihre relevanten Inhalte hin zu überprüfen. Über z.B. denselben Kommunikationsweg 2 kann der Adressat auf die zentral abgelegte Nachricht zugreifen, da mit der Kurznachricht eine Adresse verknüpft ist, die als sogenannter Pointer auf den Speicherplatz der ursprünglichen Nachricht verweist, also hier auf einen Speicherplatz im Datenserver 1.

Ist nun in einem beispielhaften Kriterium der Speicherplatz auf dem zentralen Datenserver begrenzt, so kann es vorgesehen sein, dass automatisch eine Nachricht von dem zentralen Datenserver 1 auf einen anderen Speicherplatz, beispielsweise auf einem anderen Datenserver, ausgelagert wird. Diese Auslagerung muss nicht unbedingt in Abhängigkeit des genannten Speicherplatz-Kriteriums erfolgen, es kann beispielsweise grundsätzlich vorgesehen sein, dass e-mails zu bestimmten Themen von dem zentralen Datenserver 1 auf unterschiedliche weitere Datenserver verlagert werden.

So kann es gemäß einer bevorzugten Ausführungsform wie in Figur 1 dargestellt vorgesehen sein, dass sämtliche eingelaufenen Nachrichten zu einem Thema T1 auf einen ringförmigen Weg geschickt werden, die vom zentralen Datenserver 1 ausgehen und zunächst zu einem Datenserver S2 führt. Auf diesem Server 2 wird eine Nachricht gespeichert und dementsprechend der Adresszeiger der Kurznachricht geändert, so dass anschließend der Adressat durch Auswählen der Kurznachricht beispielsweise über den Kommunikationsweg 3 automatisch auf die Nachricht zugreift, die nun auf dem Server S2 abgelegt ist.

Bei Erfüllung weiterer Kriterien, wie z.B. über laufendem Speicherplatz auf dem Server S2 kann es vorgesehen sein, dass die Nachricht weiter geschickt wird auf einen Server S3 usw., bis die Nachricht gegebenenfalls wieder beim zentralen Speicher 1 aufläuft. Dieser Vorgang kann sich immer weiter wiederholen.

Die benötigte Speicherplatzkapazität für sämtliche vorhandenen Nachrichten wird somit verteilt auf mehrere Server, so dass es eine gleichmäßigere Auslastung des Gesamtsystems gibt, in dem Speicher auf mehreren Computern, insbesondere auch unterschiedlicher Netzdienstanbieter organisiert sind.

Gemäß der Ausführung kann es weiterhin vorgesehen sein, dass Nachrichten zu einem anderen Thema T2 einen anderen ringförmigen Weg über Server S5, S6 und so fort nehmen.

Bei der dargestellten Konfiguration kann es dann zur Verteilung der Kosten vorgesehen sein, dass die Speicherplatzkosten, die auf dem Weg bezüglich des Themas T1 entstehen, anders verrechnet werden als diejenigen Kosten, die auf dem Weg einer Nachricht bezüglich des Themas T2 anfallen. Die Verrechnung der Kosten kann nach beliebigen Kriterien erfolgen, beispielsweise kann es vorgesehen sein, dass die Kosten bezüglich des Themas T1 von einem Sponsor übernommen werden, der entsprechende Nachrichten bezüglich des Themas T1 als Werbung für sein Unternehmen auffasst.

In der erfindungsgemäßen Ausführung kann es vorgesehen sein, dass die Server, die eine Nachricht auf ihrem insbesondere ringförmigen Weg durchläuft, nicht notwendigerweise von ein- und demselben Netzdienstanbieter betreut werden. Es kann ebenso vorgesehen sein, dass eine Nachricht über Server unterschiedlicher Netzdienstanbieter läuft, wobei dann in der Verrechnung eine Kompensation der entsprechenden Kosten erfolgt, um jeden der Netzanbieter an den Einnahmen zu beteiligen.

## Patentansprüche

1. Verfahren zur Behandlung von Nachrichten, die von einem Absender über ein Kommunikationsnetz, insbesondere ein Telefonnetz oder das Internet, an einen Adressaten gesendet werden, wobei eine Nachricht in einem Speicher zum späteren Abruf durch den Adressaten zwischengespeichert wird und der Adressat eine Kurznachricht über den Erhalt der Nachricht bekommt, wobei in Verbindung mit der Kurznachricht ein Adresszeiger generiert wird, der auf den Speicherplatz der Nachricht hinweist, **dadurch gekennzeichnet, dass** eine Nachricht während ihrer Speicherzeit nacheinander in unterschiedlichen Speichern gespeichert wird und der Adresszeiger an die Adresse des momentanen Speichers angepasst wird.

2. Verfahren nach Anspruch 1, **dadurch gekennzeichnet, dass** ein Speicher Teil eines an das Kommunikationsnetz angeschlossenen Computers ist, insbesondere jeder Speicher Teil eines anderen Computers ist.

3. Verfahren nach einem der vorherigen Ansprüche, **dadurch gekennzeichnet, dass** eine Nachricht in Abhängigkeit wenigstens eines vorgegebenen Kriteriums von einem Speicher in einen anderen übertragen wird, insbesondere in Abhängigkeit des verfügbaren Speicherplatzes und/oder der Art des Inhaltes einer Nachricht und/oder nach den Prinzipien first-in-first-out oder first-in-last-out.

4. Verfahren nach einem der vorherigen Ansprüche, **dadurch gekennzeichnet, dass** die Übertragung einer Nachricht von einem Speicher in einen anderen Speicher nach Rückfrage beim Adressaten oder automatisch erfolgt.

5. Verfahren nach einem der vorherigen Ansprüche, **dadurch gekennzeichnet, dass** der Weg einer Nachricht, insbesondere die Reihenfolge der Speicher vorgegeben ist, insbesondere wobei der Weg ein sich wiederholender geschlossener Weg ist.

6. Verfahren nach einem der vorherigen Ansprüche, **dadurch gekennzeichnet, dass** ein geschlossener Weg abhängig ist von wenigstens einem Kriterium, insbesondere von der Art des Inhalts der Nachricht oder der Art des Protokolls der Nachricht.

7. Verfahren nach einem der vorherigen Ansprüche, **dadurch gekennzeichnet, dass** eine Abrechnung der Kosten für die Speicherung einer Nachricht in Abhängigkeit des Weges erfolgt, insbesondere wobei die Kosten für die Speicherung auf einem Weg von einem Sponsor zumindest teilweise übernommen werden.

8. System, insbesondere zur Durchführung des Verfahrens nach einem der vorherigen Ansprüche, umfassend wenigstens ein Kommunikationsnetz mit mehreren Computern zur wenigstens temporären Speicherung von Nachrichten, **dadurch gekennzeichnet, dass** eine Nachricht anhand eines vorgegebenen Kriterium von einem Computer auf einen anderen Computer automatsich übertragbar ist, insbesondere, wobei die Computer derart organisiert sind, dass sie einen ringförmigen Weg der Nachricht bilden.
